(19) Europäisches Patentamt
European Patent Office
Office européen des brevets

(11) Veröffentlichungsnummer: **0 065 718**
**B1**

(12) # EUROPÄISCHE PATENTSCHRIFT

(45) Veröffentlichungstag der Patentschrift: **22.06.88**

(51) Int. Cl.[4]: **C 08 L 11/00**, C 08 F 36/18

(21) Anmeldenummer: **82104218.1**

(22) Anmeldetag: **14.05.82**

(54) **Mischungen aus Chloroprenpolymeren und ihre Herstellung.**

(30) Priorität: **26.05.81 DE 3120992**

(43) Veröffentlichungstag der Anmeldung: **01.12.82 Patentblatt 82/48**

(45) Bekanntmachung des Hinweises auf die Patenterteilung: **22.06.88 Patentblatt 88/25**

(84) Benannte Vertragsstaaten: **DE FR GB**

(56) Entgegenhaltungen:
**EP - A - 0 028 732**
**DE - A - 2 008 673**
**DE - A - 2 008 674**
**FR - A - 1 568 661**

(73) Patentinhaber: **BAYER AG, Konzernverwaltung RP Patentabteilung, D-5090 Leverkusen 1 Bayerwerk (DE)**

(72) Erfinder: **Musch, Rüdiger, Dr., Altenberger-Dom-Strasse 169, D-5060 Bergisch-Gladbach 2 (DE)**
Erfinder: **Pampus, Gottfried, Dr., Hahnenweg 2, D-5000 Köln 80 (DE)**
Erfinder: **Müller, Peter, Dr., Ahornstrasse 2, D-5014 Kerpen (DE)**
Erfinder: **Eisele, Ulrich, Dr., Alfred-Kubin-Strasse 13, D-5090 Leverkusen 1 (DE)**
Erfinder: **Konter, Wolfgang, Dr., Espenstrasse 49, D-4040 Neuss 21 (DE)**
Erfinder: **Göbel, Wilhelm, Dr., Max-Beckmann-Strasse 37, D-5090 Leverkusen 1 (DE)**

**EP 0 065 718 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft Polychloropren-Elastomere, die sich durch eine gute Verarbeitbarkeit und hohe Zugfestigkeit auszeichnen, und ihre Herstellung. Unter guter Verarbeitbarkeit werden beispielsweise die Masshaltigkeit der Extrudate, erniedrigte Walzfellbildungszeiten, höhere Spritzleistung usw. verstanden.

Eine Möglichkeit, Polychloropren-Elastomere mit solchen vorteilhaften Eigenschaften herzustellen, besteht darin, einem Latex eines benzollöslichen Polychloropren (Sol-Polymer) den Latex eines vernetzten Polychloroprens (Gel-Polymer) zuzumischen und den Kautschuk beispielsweise durch Gefrierkoagulation zu isolieren.

Zur Herstellung des Gel-Polymeren kann Chloropren mit einem bifunktionellen Monomeren copolymerisiert werden. Ein besonders vorteilhaftes Verfahren dieser Art wird in der DE-AS 1 720 107 beschrieben.

Gemische aus solchen Sol- und Gel-Chloroprenpolymeren hatten bisher den Nachteil, dass ein Zusatz von Gel-Polymer zum Sol-Polymeren die mechanischen Eigenschaften der Vulkanisate, z.B. die Zugfestigkeit verschlechterte.

Es wurden verschiedene Möglichkeiten vorgeschlagen, die Verschlechterung der mechanischen Eigenschaften abzumildern, z.B. in DE-AS 2 008 673.

Trotzdem konnte nicht verhindert werden, dass bei einem Zusatz von Gel-Polymeren zum Sol-Polymer die Zugfestigkeit stetig abfiel.

Es wurde nun gefunden, dass ein vernetztes Chloroprenpolymeres hergestellt werden kann, das in Mischungen mit benzollöslichen Chloroprenpolymeren einen Kautschuk ergibt, der die gewünschten guten Verarbeitungseigenschaften aufweist, dessen Vulkanisate jedoch eine wesentlich höhere Zugfestigkeit besitzen als bisher bekannte Vulkanisate aus Polychloropren. Vulkanisate aus Kautschuk-Abmischungen, mit der erfindungsgemässen Gelkomponente können sogar Zugfestigkeiten aufweisen, die mindestens ebenso hoch sind wie die Zugfestigkeit des Vulkanisats des Sol-Polymeren.

Gegenstand der Erfindung ist daher eine Polychloroprenmischung enthaltend ein Sol-Polymer und ein Gel-Polymer im Gewichtsverhältnis 1:4 bis 9:1, dadurch gekennzeichnet, dass beide in Gegenwart von 2,5–4,0 Gew.-Teilen des Kaliumsalzes der disproportionierten Abietinsäure (berechnet als Säure), 0,3–1,0 Gew.-Teilen eines Kondensationsproduktes aus Naphthalinsulfonsäure und Formaldehyd und 0,2–1,05 Gew.-Teilen Kaliumhydroxid, alle Angaben bezogen auf 100 Gew.-Teile Monomer, hergestellt worden sind und das Gelpolymer ein Copolymerisat aus Chloropren und 1,5 bis 2,5 Mol-%, bezogen auf Gesamtmonomer, eines Diesters der allgemeinen Formel

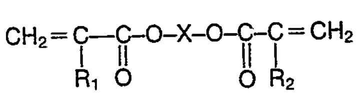

ist, worin

$R_1$ und $R_2$ Wasserstoff, Chlor oder $C_1$–$C_4$-Alkyl und

X $C_2$–$C_{10}$-Alkylen bedeuten.

Vorzugsweise wir Chloropren mit Ethylenglykoldimethacrylat copolymerisiert. Die Polymerisationstemperatur beträgt vorzugsweise 30 bis 55 °C.

Die Abmischung des Sol-Polymers mit dem Gel-Polymer erfogt unter Rühren bei Temperaturen zwischen 5 und 30 °C.

Vulkanisate, die aus einem erfindungsgemässen Kautschuk erhalten werden, zeigen eine Zugfestigkeit, die um ca. 2 MPa höher liegt als die von Vulkanisaten aus Kutschuken, deren Gel-Polymeres mit mehr als 2,5 Mol-% Diester hergestellt wurde. Mit einem Diester-Anteil von weniger als 1,5 Mol-% erhält man zwar ebenfalls hohe Zugfestigkeiten der Vulkanisate, jedoch wird das Verarbeitungsverhalten des Kautschuks und seiner Mischungen verschlechtert.

Die Polymerisation des löslichen und des vernetzten Chloroprenpolymeren wird in Emulsion kontinuierlich oder diskontinuierlich nach üblichen Methoden durchgeführt.

Beispiel 1

Herstellung des Sol-Polymeren

| | |
|---|---|
| Chloropren | 100,00 g |
| n-Dodecylmercaptan | 0,25 g |
| Entsalztes Wasser | 120,00 g |
| Kaliumsalz einer disproportionierten Abietinsäure | 4,00 g |
| Kalilauge | 0,80 g |
| Kaliumsalz des Kondensationsproduktes aus Naphthalinsulfonsäure und Formaldehyd | 0,60 g |

wurden unter Stickstoff bei 40 °C polymerisiert, wobei eine 1 gew.-%ige wässrige Lösung von Formamidinsulfinsäure kontinuierlich dem Ansatz zufloss.

Bei einem Monomerenumsatz von 65% wurde die Reaktion mit 0,04 g einer 2,5 gew.-%igen Lösung von Diethylhydroxylamin abgestoppt und das Monomere durch Wasserdampfdestillation entfernt.

Herstellung des Gel-Polymeren

| | |
|---|---|
| Chloropren | 95,00 g |
| Ethylenglykoldimethacrylat | 5,00 g |
| n-Dodecylmerkaptan | 0,30 g |
| Entsalztes Wasser | 120,00 g |
| Kaliumsalz einer disproportionierten Abietinsäure | 3,50 g |
| Kalilauge | 0,40 g |
| Kaliumsalz des Kondensationproduktes aus Naphthalinsulfonsäure und Formaldehyd | 0,60 g |

wurden unter Stickstoff bei 45 °C polymerisiert, indem eine 2,5 gew.-%ige wässrige Lösung von Formamidinsulfinsäure kontinuierlich dem Ansatz zufloss.

Der Latex des Gel-Polymeren wurde mit dem Latex des Sol-Polymeren in verschiedenen Verhältnissen abgemischt. Der Kautschuk wurde durch Gefrierkoagulation isoliert.

Anschliessend wurde folgende Mischung hergestellt:

| | |
|---|---|
| Kautschuk | 100,00 g |
| Stearinsäure | 0,50 g |
| Magnesiumoxid | 4,00 g |
| Phenyl-β-naphthylamin | 2,00 g |
| Aktivruss N 762 | 30,00 g |
| Zinkoxid | 5,00 g |
| Ethylenthioharnstoff | 0,50 g |

Die Mischung wurde bei 150 °C in 40 min vulkanisiert, die Zug-Dehnungs-Prüfungen wurden am Normring ausgeführt.

Nachstehende Tabelle zeigt die Zugfestigkeiten der Vulkanisate der verschiedenen Abmischungen.

| | | | | |
|---|---|---|---|---|
| Sol-Polymer [g] | 100 | 80 | 60 | 40 |
| Gel-Polymer* [g] | 0 | 20 | 40 | 60 |
| Zugfestigkeit (MPa) | 17,9 | 17,8 | 19,0 | 18,1 |

* enthaltend 2,3 Mol% Ethylenglycoldimethacrylat bez. auf Gesamtmonomer

Für die folgenden Beispiele 2–5 wurde ein Sol-Polymer gemäss Beispiel 1 mit einem Gel-Polymeren mit unterschiedlichen Mengen an Ethylenglykoldimethacrylat gemäss Beispiel 1 kontinuierlich polymerisiert und abgemischt.

Die Abmischungen enthielten 60 Gew.-% Sol-Polymer und 40 Gew.-% Gel-Polymer bezogen auf Gesamtpolymeres. Der Kautschuk wurde wie oben gemischt und vulkanisiert.

Die nachstehende Tabelle zeigt die Zugfestigkeiten der Vulkanisate.

| | Chloropren [g] | Ethylenglykoldimethacrylat [Mol%] | Zugfestigkeit (MPa) |
|---|---|---|---|
| Beispiel 1 | 95,0 | 2,3 | 19,0 |
| Beispiel 2* | 90,5 | 4,5 | 14,8 |
| Beispiel 3* | 93,5 | 3,0 | 15,0 |
| Beispiel 4 | 94,5 | 2,5 | 18,8 |
| Beispiel 5* | 97,0 | 1,4 | 18,4 |

* Vergleichsbeispiele

In den Beispielen 1a–5a und 6 wurde das Sol-Polymer aus Beispiel 1 mit Gel-Polymeren mit unterschiedlichen Mengen Ethylenglykoldimethacrylat, hergestellt nach Beispiel 1, abgemischt, jedoch nicht vulkanisiert.

Die Abmischungen enthielten 60 Gew.-% Sol-Polymer und 40 Gew.-% Gel-Polymer, bezogen auf Gesamtpolymer.

An diesen Kautschuken wurde die Spritzquellung als charakteristisches Merkmal für das Verarbeitungsverhalten gemessen.

| | Chloropren g | Ethylenglykoldimethacrylat Mol% | Spritzquellung % |
|---|---|---|---|
| Beispiel 1a | 95,0 | 2,3 | 50 |
| Beispiel 2a* | 90,5 | 4,5 | 50 |
| Beispiel 5a* | 97,0 | 1,4 | 70 |
| Beispiel 6* | 99,0 | 0,5 | 130 |

* Vergleichsbeispiele

**Patentansprüche**

1. Polychloroprenmischung enthaltend ein Sol-Polymer und ein Gel-Polymer im Gewichtsverhältnis 1:4 bis 9:1, dadurch gekennzeichnet, dass beide in Gegenwart von 2,5–4,0 Gew.-Teilen des Kaliumsalzes der disproportionierten Abietinsäure (berechnet als Säure), 0,3–1,0 Gew.-Teilen eines Kondensationsproduktes aus Naphthalinsulfonsäure und Formaldehyd und 0,2–1,5 Gew.-Teilen Kaliumhydroxid, alle Angaben bezogen auf 100 Gew.-Teile Monomer, hergestellt worden sind und das Gelpolymer ein Copolymerisat aus Chloropren und 1,5 bis 2,5 Mol-%, bezogen auf Gesamtmonomer, eines Diesters der allgemeinen Formel

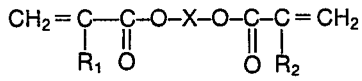

ist, worin

$R_1$ und $R_2$ Wasserstoff, Chlor oder $C_1$–$C_4$-Alkyl und

X $C_2$–$C_{10}$-Alkylen bedeuten.

2. Polychloroprenmischung nach Anspruch 1, dadurch gekennzeichnet, dass man als Diester Ethylenglykoldimethacrylat einsetzt.

3. Verfahren zur Herstellung von Chloroprenmischungen enthaltend ein Sol-Polymer und ein Gel-Polymer im Gewichtsverhältnis 1:4 bis 9:1, dadurch gekennzeichnet, dass man beide für sich in Gegenwart von 2,5–4,0 Gew.-Teilen des Kaliumsalzes der disproportionierten Abietinsäure (berechnet als Säure) 0,3–1,0 Gew.-Teilen eines Kondensationsproduktes aus Naphthalinsulfonsäure und Formaldehyd und 0,2–1,5 Gew.-Teilen Kaliumhydroxid, alle Angaben bezogen auf 100 Gew.-Teile Monomer, durch Polymerisation herstellt und anschliessend Gel- und Sol-Polymer bei Temperaturen von 5 bis 30 °C vermischt, und dass das Gel-Polymer, ein Copolymerisat aus Chloropren und 1,5 bis 2,5 Mol-%, bezogen auf Gesamtmonomer, eines Diesters der allgemeinen Formel

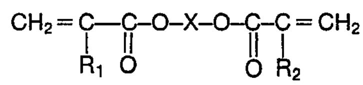

ist, worin

$R_1$ und $R_2$ Wasserstoff, Chlor oder $C_1$–$C_4$-Alkyl und

X $C_2$–$C_{10}$-Alkylen bedeuten.

## Claims

1. A polychloroprene mixture containing a sol polymer and a gel polymer in a ratio by weight of 1:4 to 9:1, characterized in that the two polymers were prepared in the presence of 2.5 to 4.0 parts by weight of the potassium salt of disproportionated abietic acid (expressed as acid), 0.3 to 1.0 part by weight of a condensation product of naphthalene sulfonic acid and formaldehyde and 0.2 to 1.5 parts by weight of potassium hydroxide, based in each case on 100 parts by weight of monomer, and the gel polymer is a copolymer of chloroprene and 1.5 to 2.5 mole%, based on total monomer, of a diester corresponding to the following general formual

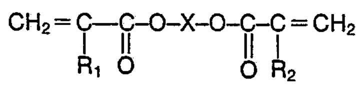

in which

$R_1$ and $R_2$ are hydrogen, chlorine or $C_1$–$C_4$ alkyl and

X is $C_2$–$C_{10}$ alkylene.

2. A polychloroprene mixture as claimed in claim 1, characterized in that ethylene glycol dimethacrylate is used as the diester.

3. A process for the production of chloroprene mixtures containing a sol polymer and a gel polymer in a ratio by weight of 1:4 to 9:1, characterized in that the two polymers are each prepared by polymerization in the presence of 2.5 to 4.0 parts by weight of the potassium salt of disproportionated abietic acid (expressed as acid), 0.3 to 1.0 part by weight of a condensation product of naphthalene sulfonic acid and formaldehyde and 0.2 to 1.5 parts by weight of potassium hydroxide, based in each case on 100 parts by weight of monomer, and the gel polymer and sol polymer are subsequently mixed at temperatures of 5 to 30 °C and in that the gel polymer is a copolymer of chloroprene and 1.5 to 2.5 mole-%, based on monomers, of a diester corresponding to the following general formula

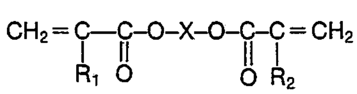

in which

$R_1$ and $R_2$ are hydrogen, chlorine or $C_1$–$C_4$ alkyl and

X is $C_2$–$C_{10}$ alkylene.

## Revendications

1. Mélange de polychloroprènes contenant un polymère du type sol et un polymère du type gel dans un rapport en poids de 1:4 à 9:1, caractérisé en ce que les deux polymères ont été obtenus en présence de 2,5 à 4,0 parties en poids du sel de potassium de l'acide abiétique dismuté (calculé par rapport à l'acide), 0,3 à 1,0 partie en poids d'un produit de condensation d'acide naphthalènesulfonique et de formaldéhyde et 0,2 à 1,5 partie en poids d'hydroxyde de potassium, toutes les indications étant données pour 100 parties en poids de monomère, et le polymère du type gel est un copolymère de chloroprène et de 1,5 à 2,5 moles%, par rapport au total des monomères, d'un diester de formule générale

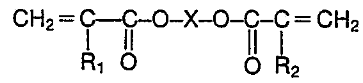

dans laquelle

$R_1$ et $R_2$ représentent l'hydrogène, le chlore ou un groupe alkyle en $C_1$ à $C_4$ et

X est un groupe alkylène en $C_2$ à $C_{10}$.

2. Mélange de polychloroprènes suivant la revendication 1, caractérisé en ce qu'on utilise comme diester le diméthacrylate d'éthylèneglycol.

3. Procédé de production de mélanges de chloroprènes contenant un polymère du type sol et un polymère du type gel dans un rapport en poids de 1:4 à 9:1, caractérisé en ce qu'on prépare les deux polymères individuellement en présence de 2,5 à 4,0 parties en poids du sel de potassium de l'acide abiétique dismuté (calculé par rapport à l'acide), 0,3 à 1,0 partie en poids d'un produit de condensation d'acide naphthalènesulfonique et de formaldéhyde, et 0,2 à 1,5 partie en poids d'hydroxyde de potassium, toutes les indications se rapportant à 100 parties en poids de monomère, par polymérisation, puis on mélange le polymère du type gel et le polymère du type sol à des températures de 5 à 30 °C, et en ce que le polymère du type gel est un produit de copolymérisation du chloroprène et de 1,5 à 2,5 moles%, par rapport aux monomères totaux d'un diester de formule générale

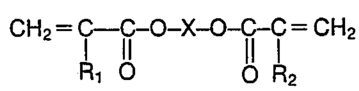

dans laquelle

$R_1$ et $R_2$ représentent l'hydrogène, le chlore ou un groupe alkyle en $C_1$ à $C_4$ et

X est un groupe alkylène en $C_2$ à $C_{10}$.